(19) Europäisches Patentamt
European Patent Office
Office européen des brevets

(11) **EP 3 520 210 B1**

(12) **FASCICULE DE BREVET EUROPEEN**

(45) Date de publication et mention de la délivrance du brevet:
**05.08.2020   Bulletin 2020/32**

(21) Numéro de dépôt: **17784365.3**

(22) Date de dépôt: **22.09.2017**

(51) Int Cl.:
*H02J 7/00* (2006.01)   *H02M 1/42* (2007.01)
*H02M 7/219* (2006.01)   *H02J 7/10* (2006.01)

(86) Numéro de dépôt international:
**PCT/FR2017/052544**

(87) Numéro de publication internationale:
**WO 2018/060572 (05.04.2018 Gazette 2018/14)**

(54) **PROCEDE DE COMMANDE D'UN REDRESSEUR TRIPHASE POUR UN DISPOSITIF DE CHARGE EMBARQUE SUR UN VEHICULE ELECTRIQUE OU HYBRIDE**

VERFAHREN ZUR STEUERUNG EINES DREIPHASIGEN WECHSELRICHTERS FÜR EINE LADEVORRICHTUNG AN BORD EINES ELEKTRO- ODER HYBRIDFAHRZEUGS

METHOD FOR CONTROLLING A THREE-PHASE RECTIFIER FOR A CHARGING DEVICE ON BOARD AN ELECTRICAL OR HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.09.2016   FR 1659116**

(43) Date de publication de la demande:
**07.08.2019   Bulletin 2019/32**

(73) Titulaires:
• **Renault SAS**
  **92100 Boulogne Billancourt (FR)**
• **Nissan Motor Co., Ltd.**
  **Kanagawa 221-0023 (JP)**

(72) Inventeurs:
• **KVIESKA, Bruno**
  **78000 Versailles (FR)**
• **MALOUM, Abdelmalek**
  **94550 Chevilly Larue (FR)**
• **MERIENNE, Ludovic**
  **91190 Gif sur Yvette (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
• **HERMINJARD J ED - EPE ASSOCIATION: "THREE-PHASE UNITE POWER FACTOR AC/DC CONVERTER (PFC) WITH DUAL ISOLATED DC/DC CONVERTER FOR A BATTERY CHARGER", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. 8, 7 septembre 1999 (1999-09-07), pages 1-10, XP000878497, ISBN: 978-90-75815-04-7**
• **WANG HAOYU ET AL: "Transportation Electrification: Conductive charging of electrified vehicles", IEEE ELECTRIFICATION MAGAZINE, IEEE, USA, vol. 1, no. 2, 1 décembre 2013 (2013-12-01), pages 46-58, XP011541179, ISSN: 2325-5897, DOI: 10.1109/MELE.2013.2294238 [extrait le 2014-02-26]**

EP 3 520 210 B1

**Description**

La présente invention concerne un procédé de commande d'un redresseur triphasé pour un dispositif de charge à entrée triphasée, comprenant un convertisseur AC-DC (courant alternatif - courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

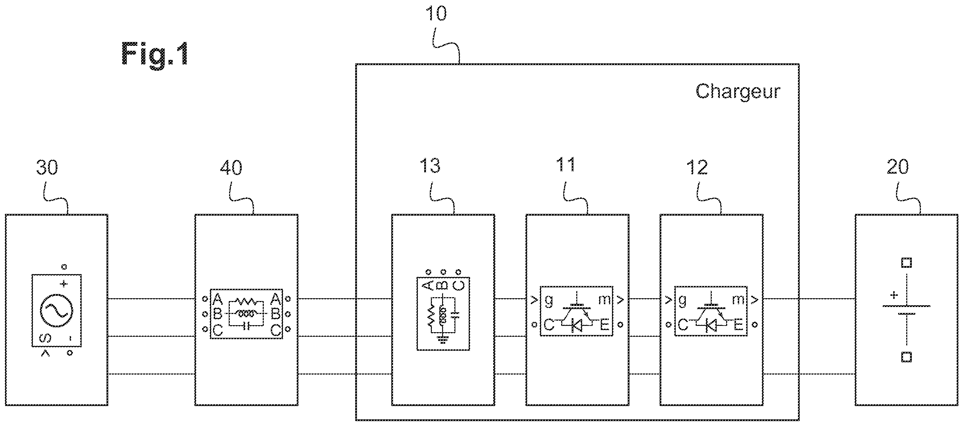

On se place ici dans la catégorie des dispositifs de charge à entrée triphasée, qui présentent une puissance de charge supérieure relativement aux dispositifs de charge à entrée monophasée. La figure 1 illustre une topologie connue d'un dispositif de charge 10 isolé, embarqué sur un véhicule électrique ou hybride pour la recharge de la batterie haute tension 20 du véhicule à partir du réseau électrique triphasé 30 auquel le dispositif de charge embarqué 10 est connecté par l'intermédiaire de l'impédance de ligne 40 du réseau.

Afin de mettre en œuvre la fonction de conversion AC-DC avec isolation galvanique, il est connu d'utiliser un dispositif de charge 10 comprenant un premier convertisseur AC-DC, qui comporte un circuit correcteur de facteur de puissance 11 (PFC, pour « Power factor Correction ») afin de limiter les harmoniques de courant d'entrée et un deuxième convertisseur DC-DC (courant continu - courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 11 par rapport au réseau électrique triphasé 30.

Le circuit PFC 11 est géré par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC, il est possible de mettre en œuvre un redresseur triphasé trois nivaux à trois interrupteurs, communément connu sous le nom de redresseur triphasé de Vienne. Le choix de cette topologie est en effet particulièrement avantageux du point de vue des performances pour la correction de facteur de puissance.

Le document de brevet CN 104811061 décrit à la figure 1 une modélisation d'un tel redresseur PFC triphasé où chaque phase de la tension d'entrée alternative triphasée est reliée par des inductances respectives L1, L2, L3 à un bras de commutation du redresseur pourvu d'un interrupteur de puissance, respectivement S1, S2, S3, les interrupteurs de puissance étant disposés chacun entre une inductance respective et un point milieu M entre les deux tensions de sortie du redresseur, correspondant respectivement à la tension sur un premier condensateur de sortie C1 connecté entre le point milieu et une ligne d'alimentation positive et à la tension sur un deuxième condensateur de sortie C2 connecté entre le point milieu et une ligne d'alimentation négative.

Généralement pour commander un tel redresseur, on mesure les tensions et les courants en entrée de chaque interrupteur ainsi qu'en sortie du redresseur et on utilise des boucles de régulation permettant de régler le temps de conduction moyen des interrupteurs. Dans le document CN 104811061, l'objectif n'est pas de réguler un courant réseau suivant les objectifs décrits plus haut, mais de réguler les tensions sur les condensateurs de sortie par le PFC de sorte à délivrer des tensions constantes. En particulier, ces tensions sont stabilisées par les interrupteurs de puissance en commande pleine onde. L'avantage de cette commande réside dans la réactivité, cependant, en raison des harmoniques qu'elle engendre, elle n'est pas nécessairement compatible avec les contraintes de qualité imposées par les distributeurs d'énergie (contenu harmonique, CEM).

Un but de l'invention est de pallier cette limitation.

Les documents HERMINJARD J ED - EPE ASSOCIATION: "THREE-PHASE UNITY POWER FACTOR AC/DC CONVERTER (PFC) WITH DUAL ISOLATED DC/DC CONVERTER FOR A BATTERY CHARGER" et WANG HAOYU ET AL: "Transportation Electrification: Conductive charging of electrified vehicles", font partie de l'état de la technique de cette demande.

Conformément à l'invention, ce but est atteint par un procédé de commande d'un circuit correcteur de facteur de puissance pour un dispositif de charge de batterie embarqué dans un véhicule automobile électrique ou hybride, ledit dispositif de charge étant apte à être connecté à un réseau d'alimentation électrique triphasé afin de charger la batterie et comportant un convertisseur AC-DC isolé comprenant ledit circuit correcteur de facteur de puissance et un convertisseur DC-DC, ledit circuit correcteur de facteur de puissance étant un redresseur triphasé de Vienne comportant trois bras de commutation aptes à être connectés chacun à l'une des phases respectives du réseau d'alimentation triphasé par l'intermédiaire d'une bobine d'inductance en série, ledit procédé comprenant un asservissement du courant réseau en entrée du redresseur triphasé de Vienne, ledit asservissement étant caractérisé en ce qu'il comprend l'application d'une boucle de régulation pour chacun des courants entre phases en entrée du redresseur triphasé de Vienne, ayant une variable de commande et une consigne, ladite variable de commande étant un rapport cyclique différentiel, soit un écart de rapport cyclique entre phases appliqué sur les bras de commutation correspondants du redresseur triphasé de Vienne, les courants entre phases étant les courants différentiels correspondant à chaque paire de phases en entrée du redresseur triphasé de Vienne.

Avantageusement, on met en œuvre les étapes suivantes :

- acquisition de mesures des tensions et des courants entre phases en entrée du redresseur triphasé de Vienne,
- détermination d'une loi de commande dynamique, ladite loi de commande intégrant une action proportionnelle et une action intégrale sur l'écart entre la mesure du courant entre phases et la consigne, la prise en compte de la variation temporelle de la consigne, et de la mesure de la tension entre phases en tant que perturbation dans la boucle de régulation du courant entre phases, et
- calcul de l'écart de rapport cyclique entre phases suivant ladite loi de commande déterminée.

Avantageusement, chaque bras de commutation comprend une paire d'interrupteurs en série constitué d'un premier interrupteur, qui est piloté quand un courant d'entrée correspondant est positif, et d'un second interrupteur, qui est piloté quand le courant d'entrée correspondant est négatif.

Il est en outre proposé un dispositif de commande d'un circuit correcteur de facteur de puissance pour un dispositif de charge de batterie embarqué dans un véhicule automobile électrique ou hybride, ledit dispositif de charge étant apte à être connecté à un réseau d'alimentation électrique triphasé afin de charger la batterie et comportant un convertisseur AC-DC isolé comprenant ledit circuit correcteur de facteur de puissance et un convertisseur DC-DC, ledit circuit correcteur de facteur de puissance étant un redresseur triphasé de Vienne comportant trois bras de commutation aptes à être connectés chacun à l'une des phases respectives du réseau d'alimentation triphasé par l'intermédiaire d'une bobine d'inductance en série, ledit dispositif comprenant des moyens de traitement agencés pour exécuter les étapes du procédé décrit ci-dessus. Ces moyens de traitement peuvent par exemple comprendre un processeur, par exemple un microprocesseur, un microcontrôleur, ou autre.

L'invention concerne encore un véhicule automobile électrique ou hybride comprenant une batterie haute tension et un dispositif de charge embarqué apte à charger la batterie à partir d'un réseau d'alimentation électrique triphasé, ledit dispositif de charge comportant un convertisseur AC-DC isolé comprenant un circuit correcteur de facteur de puissance et un convertisseur DC-DC, ledit circuit correcteur de facteur de puissance étant un redresseur triphasé de Vienne comportant trois bras de commutation aptes à être connectés chacun à l'une des phases respectives du réseau d'alimentation triphasé par l'intermédiaire d'une bobine d'inductance en série, ledit véhicule comprenant un dispositif de commande tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux figures suivantes dans lesquelles :

- la figure 1 illustre de façon schématique une topologie connue d'un dispositif de charge de batterie destiné à être embarqué sur un véhicule automobile électrique ou hybride,
- la figure 2 illustre de façon schématique la structure d'un redresseur triphasé de Vienne intégré au dispositif de charge de la figure 1, sans le filtre d'entrée.

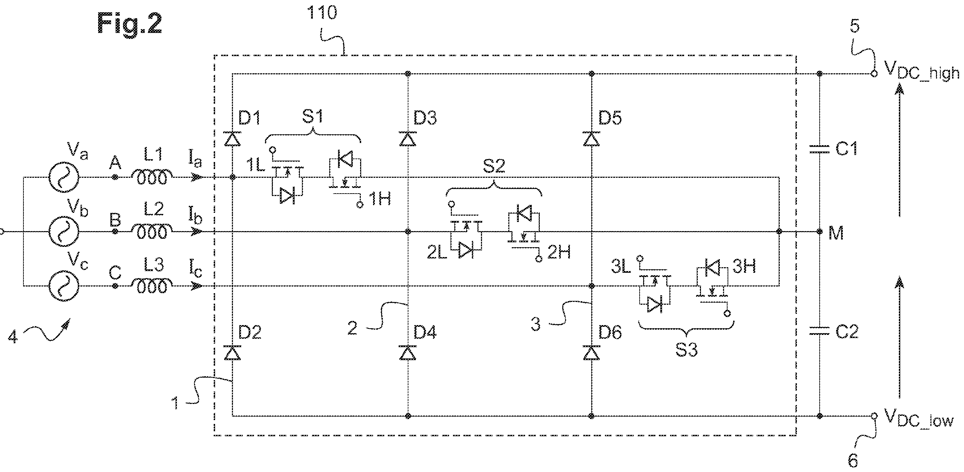

La figure 2 rappelle donc la structure du redresseur triphasé de Vienne utilisé ici pour la correction du facteur de puissance du dispositif de charge. Le redresseur triphasé de Vienne 110 comprend trois connexions entrantes parallèles couplées chacune à une phase A, B, C d'un réseau d'alimentation électrique 4 triphasé par l'intermédiaire d'une bobine d'inductance en série L1, L2, L3, et reliée chacune à une paire d'interrupteurs S1, S2, S3 formant un bras de commutation du redresseur triphasé de Vienne.

Chaque paire d'interrupteurs S1, S2, S3 comprend un montage série constitué d'un premier interrupteur correspondant 1H, 2H, 3H, qui est piloté quand un courant d'entrée correspondant Ia, Ib, Ic est positif, et d'un second interrupteur correspondant 1L, 2L, 3L qui est piloté quand le courant d'entrée correspondant est négatif. Les interrupteurs sont formés par des composants semi-conducteurs commandés à la fermeture et à l'ouverture, tel que par exemple des transistors MOS (acronyme anglais pour « Metal Oxide Semiconductor »), connectés en antiparallèle avec une diode. Les interrupteurs 1H sont également nommés interrupteurs haut et les interrupteurs 1L, interrupteurs bas.

Le redresseur triphasé de Vienne comprend aussi trois branches parallèles 1, 2 et 3, comportant chacune deux diodes D1 et D2, D3 et D4 et D5 et D6, qui forment un pont triphasé à six diodes permettant de redresser le courant et la tension prélevés à partir d'un réseau d'alimentation électrique 4 triphasé. Chaque entrée du redresseur triphasé de Vienne est connectée, par une connexion entrante parallèle respective, à un point de connexion situé entre deux diodes d'une même branche 1, 2 et 3.

Les deux extrémités communes des branches 1, 2 et 3 constituent deux bornes de sorties 5 et 6, respectivement positive et négative, du redresseur triphasé de Vienne, qui sont destinées à être couplées au dispositif DC-DC.

Les bras de commutation S1, S2, S3 de chaque phase sont par ailleurs connectés chacun respectivement entre le point de connexion situé entre les deux diodes des première, deuxième et troisième branches 1, 2 et 3 et un point milieu M des tensions de sortie VDC_high et VDC_low du redresseur triphasé de Vienne, correspondant respectivement à la tension sur un condensateur de sortie C1 entre la borne de sortie positive 5 du redresseur triphasé et le point milieu M et à la tension sur un condensateur de sortie C2 entre le point milieu M et une borne de sortie négative 6 du redresseur triphasé.

A noter que la tension sur les condensateurs de sortie C1, C2 est asservie de façon indépendante par le convertisseur DC-DC du dispositif de charge connecté en sortie du redresseur triphasé de Vienne, selon la topologie globale illustré à la figure 1. Autrement dit, les tensions de sortie du redresseur triphasé de Vienne sont commandées par le convertisseur DC-DC.

Le redresseur triphasé de Vienne intercalé à l'entrée de l'alimentation du chargeur assume le rôle de correction du facteur de puissance du chargeur de régulateur des courants réseau. Un tel rôle permet d'empêcher les courants perturbateurs (harmoniques) produits par le chargeur, de circuler à travers l'impédance du réseau, située en amont du redresseur de Vienne.

Les bras de commutation S1, S2 et S3 de chaque phase sont contrôlés aux moyens de trois signaux de commande PWM (acronyme anglo-saxon pour « Pulse Width Modulation ») ayant un rapport cyclique variable individuellement réglé par des moyens de traitement de type microcontrôleur par exemple (non représenté). Ainsi, les moyens de traitement sont adaptés à déterminer les rapports cycliques des signaux de commande de commutation des interrupteurs des bras de commutation du redresseur, nécessaires pour l'asservissement des courants sinusoïdaux en entrée du redresseur.

On va effectuer tout d'abord une modélisation du système en vue de la détermination de la commande du redresseur triphasé de Vienne.

Soient Va, Vb et Vc les tensions simples, entre phases et neutre, en entrée du redresseur triphasé de Vienne et L la valeur des inductances L1, L2 et L3 connectés en série respectivement entre les points A, B et C et les bras de commutation du redresseur. Partant de l'hypothèse d'une boucle de tension à partir de la terre en entrée jusqu'à la terre en passant par le point milieu M, le courant de phase Ia injecté dans la phase A peut être modélisé de la façon suivante :
Si Ia >0 :

$$Va = L\dot{I}a + (1-\alpha_H)V_{DC\_high} + V_M$$

d'où

$$\dot{I}a = \frac{1}{L}\big[(\alpha_H - 1)V_{DC\_high} + V_{AM}\big]$$

Où $\alpha_H$ est le rapport cyclique de la tension de commande appliquée à l'interrupteur haut 1H qui est piloté lorsque le courant correspondant Ia est positif. A noter qu'il s'agit d'un modèle moyen. Ainsi, si $\alpha_H = 1$, la tension est nulle entre la sortie de la bobine d'inductance L1 et le point milieu M. Si $\alpha_H = 0$, cette tension est égale à $V_{Dc\_high}$. Pour des valeurs intermédiaires de $\alpha_H$, on aura une tension intermédiaire.

Si Ia <0 :

$$Va = L\dot{I}a + (\alpha_L - 1)V_{DC\_low} + V_M$$

d'où

$$\dot{I}a = \frac{1}{L}\big[(1-\alpha_L)V_{DC\_low} + V_{AM}\big]$$

Où $\alpha_L$ est le rapport cyclique de la tension de commande appliquée à l'interrupteur bas 1L qui est piloté lorsque le courant correspondant est négatif. La même logique qu'exposée précédemment s'applique si le courant de phase la est négatif.

Soient les changements de variables suivants appliqués :

si la > 0 :

$$\alpha_a = \alpha_H - 1$$

$$V_{DC} = V_{DC\_high}$$

si la < 0 :

$$\alpha_a = 1 - \alpha_L$$

$$V_{DC} = V_{DC\_low}$$

Donc, pour tout courant de phase la, on peut écrire :

$$\dot{I}a = \frac{1}{L}\left[(\alpha_a)V_{DC} + V_{AM}\right]$$

Dans la mesure où les tensions Vdc_high et Vdc_low sont régulées par le dispositif convertisseur DC/DC on peut les considérer comme égales. Dans ce cas, nous pouvons appliquer la même démarche et considérer seulement une variable $V_{DC}$ pour les 3 phases.

En appliquant la même démarche que ci-dessus pour les deux autres courants de phase Ib et Ic, on obtient les équations suivantes :

$$\dot{I}a = \frac{1}{L}\left[(\alpha_a)V_{DC} + V_{AM}\right] \qquad (1)$$

$$\dot{I}b = \frac{1}{L}\left[(\alpha_b)V_{DC} + V_{BM}\right] \qquad (2)$$

$$\dot{I}c = \frac{1}{L}\left[(\alpha_c)V_{DC} + V_{CM}\right] \qquad (3)$$

A partir de ces équations (1), (2) et (3), en effectuant les calculs respectifs (1)-(2), (2)-(3) et (3)-(1), on obtient le système d'équations suivant fournissant les variations temporelles des courants entre phases en entrée du redresseur triphasé de Vienne :

$$\dot{I}ab = \frac{1}{L}\left[(\alpha_a - \alpha_b)V_{DC} + V_{AB}\right] \qquad (4)$$

$$\dot{I}bc = \frac{1}{L}\left[(\alpha_b - \alpha_c)V_{DC} + V_{BC}\right] \qquad (5)$$

$$\dot{I}ca = \frac{1}{L}\left[(\alpha_b - \alpha_a)V_{DC} + V_{CA}\right] \qquad (6)$$

Où $I_{ab}$ est le courant différentiel entre les phases A et B, $I_{bc}$ le courant différentiel entre les phases B et C et $I_{ca}$ le courant différentiel entre les phases C et A, VAB la tension entre les phases A et B, $V_{BC}$ la tension entre les phases B et C et $V_{CA}$ la tension entre les phases C et A.

Ces trois dernières équations constituent la base de la modélisation mise en œuvre pour la régulation du courant en entrée du redresseur triphasé de Vienne. A noter qu'il s'agit d'appliquer trois boucles de régulation sur les courants différentiels soit sur les courants entre phases en entrée du redresseur triphasé de Vienne, la variable de commande de la régulation étant alors un rapport cyclique différentiel, soit un écart de rapport cyclique entre phases appliqué sur les bras de commutation du redresseur triphasé de Vienne correspondants à chacune desdites phases.

De surcroît, ce mode de régulation permet de procurer un certain degré de liberté pour l'application des rapports cycliques. En effet, dans la mesure où le but est d'appliquer une différence de rapport cyclique entre chaque bras de commutation du redresseur triphasé, différentes stratégies peuvent être utilisées dans le cadre de la régulation. A titre d'exemple, soit $\alpha_{ab}$ = 0.5 commandé en sortie de la régulation ($\alpha_{ab}$ étant la différence de rapport cyclique appliqué aux deux bras de commutation du redresseur triphasé de Vienne correspondant aux phases A et B), ce rapport cyclique différentiel peut être obtenu en définissant un rapport cyclique $\alpha_a$ pour le bras de commutation associé à la phase A égal à 0.6 et un rapport cyclique $\alpha_b$ pour le bras de commutation associé à la phase B égal à 0.1, ou bien encore en définissant le rapport cyclique $\alpha_a$ égal à 0.7 et le rapport cyclique $\alpha_b$ égal à 0.2.

La loi de commande proposée pour la régulation est la suivante :
Soit un système dynamique générique décrit par l'équation d'état de type :

$$\dot{x} = Ax + Bu + f$$

où x est le vecteur d'état, u la commande, A la matrice d'évolution du système, B la matrice d'application de la commande et f une perturbation.

On propose la commande suivante, permettant de configurer une fonction de régulation PID :

$$u = B^{-1}\left[-Ax - f + K_p\left(x_{req} - x\right) + \frac{K_i}{s}\left(xreq - x\right) + \dot{x}_{req}\right]$$

Les matrices A et B interviennent dans la commande, ce qui suppose donc qu'elles soient connues. Elles sont par exemple issues d'un modèle du système développé précédemment.

Le vecteur d'état x qui est défini par les valeurs prises par les courants entre phases à un instant donné, est utilisé directement. Il est préférentiellement issu d'une mesure. En variante, il pourrait être reconstruit à partir d'un observateur. Egalement, la perturbation f étant utilisée, il faut pouvoir la mesurer. Dans le système à asservir, la principale perturbation, d'un point de vue automatique, est la tension entre phases. On mesure donc cette dernière.

Par ailleurs et de façon classique, la commande comporte une action proportionnelle et une action intégrale sur l'écart entre la consigne et l'état courant. Par contre, le terme dérivatif de la commande du système à asservir n'est pas basé sur la dérivée de l'écart entre la consigne et l'état, comme cela est classiquement le cas, mais sur la dérivée de la consigne elle-même. Autrement dit, la commande prend en compte la variation temporelle de la consigne et non la variation temporelle de l'écart de l'état du système avec la consigne. En effet, la consigne fournie est une valeur générée de façon logicielle et qui n'est donc pas bruitée, de sorte que sa dérivée est également non bruitée. Ce terme de la dérivée de la consigne n'est donc pas un terme dérivatif classique d'une régulation PID, mais seulement un terme pour donner de l'avance de phase au système pour la poursuite de la consigne.

Lorsqu'on combine l'équation ci-dessus traduisant la commande avec l'équation d'état du type $\dot{x} = Ax + Bu + f$, on obtient :

$$\dot{x} = Ax + B\left\{B^{-1}\left[-Ax - f + K_p\left(x_{req} - x\right) + \frac{K_i}{s}\left(x_{req} - x\right) + \dot{x}_{req}\right]\right\} + f$$

$$\dot{x} = Ax - Ax + K_p\left(x_{req} - x\right) + \frac{K_i}{s}\left(x_{req} - x\right) + \dot{x}_{req} + f - f$$

$$K_p\left(x_{req} - x\right) + \frac{K_i}{s}\left(x_{req} - x\right) + \dot{x}_{req} - \dot{x} = 0$$

Soit l'écart e entre la consigne et le vecteur d'état du système, noté $e = x_{req} - x$, si on dérive les deux côtés de l'équation précédente, on obtient l'équation suivante :

$$\ddot{e} + K_p\dot{e} + k_i e = 0$$

Autrement dit, la loi de commande pour la régulation se résume à une équation différentielle du second ordre sur l'écart, où

$$K_p = 2\xi\omega$$

et

$$K_i = \omega^2$$

La mise au point de la régulation peut donc se faire aisément lorsqu'on définit une dynamique souhaitée pour l'écart.

On applique maintenant la loi de commande proposée ci-dessus au système défini par les équations (4), (5) et (6), qui régissent les variations temporelles des courants différentiels entre phases en entrée du redresseur triphasé de Vienne en fonction des rapports cycliques différentiels.

Dans la formulation générique de la loi de commande :

$$\dot{x} = Ax + Bu + f$$

l'équation (4) a comme paramètres :

$$x = I_{ab}$$

$$u = \left(\alpha_a - \alpha_b\right)$$

$A = 0$

$$B = \frac{V_{DC}}{L}$$

$$f = \frac{V_{AB}}{L}$$

La commande aura donc la forme suivante :

$$u = \frac{L}{V_{DC}} \left[ K_p \left( I_{ab\_req} - I_{ab} \right) + \frac{K_i}{s} \left( I_{ab\_req} - I_{ab} \right) + \dot{I}_{ab\_req} - \frac{V_{AB}}{L} \right]$$

Partant des équations (5) et (6), les boucles sur les courants différentiels respectivement entre les phases B et C et entre les phases C et A, auront exactement la même structure.

**Revendications**

1.  Procédé de commande d'un circuit correcteur de facteur de puissance (11) pour un dispositif de charge (10) de batterie (20) embarqué dans un véhicule automobile électrique ou hybride, ledit dispositif de charge étant apte à être connecté à un réseau d'alimentation électrique triphasé (4) afin de charger la batterie (20) et comportant un convertisseur AC-DC isolé comprenant ledit circuit correcteur de facteur de puissance (11) et un convertisseur DC-DC (12), ledit circuit correcteur de facteur de puissance étant un redresseur triphasé de Vienne (110) comportant trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3), ledit procédé comprenant un asservissement du courant réseau en entrée du redresseur triphasé de Vienne, **caractérisé en ce qu'**il comprend l'application d'une boucle de régulation pour chacun des courants entre phases en entrée du redresseur triphasé de Vienne, ayant une variable de commande et une consigne, ladite variable de commande étant un rapport cyclique différentiel, soit un écart de rapport cyclique entre phases appliqué sur les bras de commutation correspondants du redresseur triphasé de Vienne, les courants entre phases étant les courants différentiels correspondant à chaque paire de phases en entrée du redresseur triphasé de Vienne.

2.  Procédé selon la revendication 1, **caractérisé en ce qu'**on met en œuvre les étapes suivantes :

    - acquisition de mesures des tensions et des courants entre phases en entrée du redresseur triphasé de Vienne,
    - détermination d'une loi de commande dynamique, ladite loi de commande intégrant une action proportionnelle et une action intégrale sur l'écart entre la mesure du courant entre phases et la consigne, la prise en compte de la variation temporelle de la consigne, et de la mesure de la tension entre phases en tant que perturbation dans la boucle de régulation du courant entre phases, et
    - calcul de l'écart de rapport cyclique entre phases suivant ladite loi de commande déterminée.

3.  Procédé selon la revendication 1 ou 2, **caractérisé en ce que** chaque bras de commutation (S1, S2, S3) comprend une paire d'interrupteurs en série constitué d'un premier interrupteur (1H, 2H, 3H), qui est piloté quand un courant d'entrée correspondant est positif, et d'un second interrupteur (1L, 2L, 3L), qui est piloté quand le courant d'entrée correspondant est négatif.

4.  Dispositif de commande d'un circuit correcteur de facteur de puissance (11) pour un dispositif de charge (10) de batterie (20) embarqué dans un véhicule automobile électrique ou hybride, ledit dispositif de charge étant apte à être connecté à un réseau d'alimentation électrique triphasé (4) afin de charger la batterie et comportant un convertisseur AC-DC isolé comprenant ledit circuit correcteur de facteur de puissance (11) et un convertisseur DC-DC (12), ledit circuit correcteur de facteur de puissance (11) étant un redresseur triphasé de Vienne comportant trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3), ledit dispositif de commande comprenant des moyens de traitement agencés pour exécuter les étapes du procédé selon l'une quelconque des revendications 1 à 3.

5.  Véhicule automobile électrique ou hybride comprenant une batterie haute tension et un dispositif de charge embarqué apte à charger la batterie à partir d'un réseau d'alimentation électrique triphasé, ledit dispositif de charge comportant un convertisseur AC-DC isolé comprenant un circuit correcteur de facteur de puissance (11) et un convertisseur DC-DC (12), ledit circuit correcteur de facteur de puissance (11) étant un redresseur triphasé de Vienne comportant trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3), ledit véhicule comprenant un dispositif de commande selon la revendication 4.

**EP 3 520 210 B1**

**Patentansprüche**

1. Verfahren zur Steuerung einer Leistungsfaktorkorrekturschaltung (11) für eine in ein Elektro- oder Hybridkraftfahrzeug eingebaute Ladevorrichtung (10) für eine Batterie (20), wobei die Ladevorrichtung geeignet ist, an ein dreiphasiges Stromversorgungsnetz (4) angeschlossen zu werden, um die Batterie (20) zu laden, und einen isolierten AC/DC-Wandler, der die Leistungsfaktorkorrekturschaltung (11) umfasst, und einen DC/DC-Wandler (12) aufweist, wobei die Leistungsfaktorkorrekturschaltung ein dreiphasiger Vienna-Gleichrichter (110) ist, der drei Schaltarme (S1, S2, S3) aufweist, die geeignet sind, an jeweils eine der jeweiligen Phasen (A, B, C) des dreiphasigen Versorgungsnetzes (4) über eine Drosselwicklung in Reihe (L1, L2, L3) angeschlossen zu werden, wobei das Verfahren eine Regelung des Netzstroms im Eingang des dreiphasigen Vienna-Gleichrichters umfasst, **dadurch gekennzeichnet, dass** es die Anwendung eines Regelkreises für jeden der Phasenströme im Eingang des dreiphasigen Vienna-Gleichrichters umfasst, der eine Steuervariable und einen Sollwert besitzt, wobei die Steuervariable ein differentielles Tastverhältnis ist, das heißt eine Tastverhältnisabweichung zwischen Phasen, das auf die entsprechenden Schaltarme des dreiphasigen Vienna-Gleichrichters angewandt wird, wobei die Phasenströme die differentiellen Ströme sind, die jedem Phasenpaar im Eingang des dreiphasigen Vienna-Gleichrichters entsprechen.

2. Verfahren nach Anspruch 1, **dadurch gekennzeichnet, dass** die folgenden Schritte ausgeführt werden:

   - Erfassen von Messungen der Phasenspannungen und -ströme im Eingang des dreiphasigen Vienna-Gleichrichters,
   - Bestimmen eines dynamischen Steuerungsgesetzes, wobei das Steuerungsgesetz eine proportionale Wirkung und eine integrale Wirkung auf die Abweichung zwischen der Messung des Phasenstroms und dem Sollwert, die Berücksichtigung der zeitlichen Änderung des Sollwerts und der Messung der Phasenspannung als Störung im Regelkreis des Phasenstroms beinhaltet, und
   - Berechnen der Tastverhältnisabweichung zwischen Phasen gemäß dem bestimmten Steuerungsgesetz.

3. Verfahren nach Anspruch 1 oder 2, **dadurch gekennzeichnet, dass** jeder Schaltarm (S1, S2, S3) ein Schalterpaar in Reihe umfasst, das aus einem ersten Schalter (1H, 2H, 3H) besteht, der angesteuert wird, wenn ein entsprechender Eingangsstrom positiv ist, und aus einem zweiten Schalter (1L, 2L, 3L), der angesteuert wird, wenn der entsprechende Eingangsstrom negativ ist.

4. Vorrichtung zur Steuerung einer Leistungsfaktorkorrekturschaltung (11) für eine in ein Elektro- oder Hybridkraftfahrzeug eingebaute Ladevorrichtung (10) für eine Batterie (20), wobei die Ladevorrichtung geeignet ist, an ein dreiphasiges Stromversorgungsnetz (4) angeschlossen zu werden, um die Batterie zu laden, und einen isolierten AC/DC-Wandler, der die Leistungsfaktorkorrekturschaltung (11) umfasst, und einen DC/DC-Wandler (12) aufweist, wobei die Leistungsfaktorkorrekturschaltung (11) ein dreiphasiger Vienna-Gleichrichter ist, der drei Schaltarme (S1, S2, S3) aufweist, die geeignet sind, jeweils an eine der jeweiligen Phasen (A, B, C) des dreiphasigen Versorgungsnetzes (4) über eine Drosselwicklung in Reihe (L1, L2, L3) angeschlossen zu werden, wobei die Steuerungsvorrichtung Verarbeitungseinrichtungen umfasst, die dazu eingerichtet sind, die Schritte des Verfahrens nach einem der Ansprüche 1 bis 3 auszuführen.

5. Elektro- oder Hybridkraftfahrzeug, das eine Hochspannungsbatterie und eine eingebaute Ladevorrichtung umfasst, die geeignet ist, die Batterie ausgehend von einem dreiphasigen Stromversorgungsnetz aufzuladen, wobei die Ladevorrichtung einen isolierten AC/DC-Wandler, der die Leistungsfaktorkorrekturschaltung (11) umfasst, und einen DC/DC-Wandler (12) aufweist, wobei die Leistungsfaktorkorrekturschaltung (11) ein dreiphasiger Vienna-Gleichrichter ist, der drei Schaltarme (S1, S2, S3) aufweist, die geeignet sind, jeweils an eine der jeweiligen Phasen (A, B, C) des dreiphasigen Versorgungsnetzes (4) über eine Drosselwicklung in Reihe (L1, L2, L3) angeschlossen zu werden, wobei das Fahrzeug eine Steuerungsvorrichtung nach Anspruch 4 umfasst.

**Claims**

1. Method for controlling a power factor correction circuit (11) for a device (10) for charging a battery (20) on board an electric or hybrid motor vehicle, said charging device being capable of being connected to a three-phase power supply network (4) in order to charge the battery (20) and comprising an isolated AC-to-DC converter comprising said power factor correction circuit (11) and a DC-to-DC converter (12), said power factor correction circuit being a three-phase Vienna rectifier (110) comprising three switching arms (S1, S2, S3) each capable of being connected to one of the respective phases (A, B, C) of the three-phase power supply network (4) by means of a series inductor (L1, L2, L3), said method comprising the feedback control of the network current at the input of the three-phase Vienna rectifier, **characterized in that** it comprises applying a control loop for each one of the currents between phases at the input of the three-phase Vienna rectifier, having a control variable and a setpoint, said control variable being a differential duty cycle or a duty cycle deviation between phases applied to the corresponding switching arms of the three-phase Vienna rectifier, the currents between phases being the differential currents corresponding to each pair of phases at the input of the three-phase Vienna rectifier.

2. Method according to Claim 1, **characterized in that** the following steps are implemented:

- acquiring measurements of the voltages and the currents between phases at the input of the three-phase Vienna rectifier;
- determining a dynamic control law, said control law integrating a proportional action and an integral action on the deviation between the measurement of the current between phases and the setpoint, the consideration of the temporal variation of the setpoint and the measurement of the voltage between phases as interference in the control loop of the current between phases; and
- computing the duty cycle deviation between phases according to said determined control law.

3. Method according to Claim 1 or 2, **characterized in that** each switching arm (S1, S2, S3) comprises a pair of series switches formed by a first switch (1H, 2H, 3H), which is controlled when a corresponding input current is positive, and a second switch (1L, 2L, 3L), which is controlled when the corresponding input current is negative.

4. Device for controlling a power factor correction circuit (11) for a device (10) for charging a battery (20) on board an electric or hybrid motor vehicle, said charging device being capable of being connected to a three-phase power supply network (4) in order to charge the battery and comprising an isolated AC-to-DC converter comprising said power factor correction circuit (11) and a DC-to-DC converter (12), said power factor correction circuit (11) being a three-phase Vienna rectifier comprising three switching arms (S1, S2, S3) each capable of being connected to one of the respective phases (A, B, C) of the three-phase power supply network (4) by means of a series inductor (L1, L2, L3), said control device comprising processing means arranged to execute the steps of the method according to any of Claims 1 to 3.

5. Electric or hybrid motor vehicle comprising a high-voltage battery and an on-board charging device capable of charging the battery from a three-phase power supply network, said charging device comprising an isolated AC-to-DC converter comprising a power factor correction circuit (11) and a DC-to-DC converter (12), said power factor correction circuit (11) being a three-phase Vienna rectifier comprising three switching arms (S1, S2, S3) each capable of being connected to one of the respective phases (A, B, C) of the three-phase power supply network (4) by means of a series inductor (L1, L2, L3), said vehicle comprising a control device according to Claim 4.

Fig.1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104811061

**Littérature non-brevet citée dans la description**

- Transportation Electrification: Conductive charging of electrified vehicles. **WANG HAOYU et al.** THREE-PHASE UNITY POWER FACTOR AC/DC CONVERTER (PFC) WITH DUAL ISOLATED DC/DC CONVERTER FOR A BATTERY CHARGER. EPE ASSOCIATION